# EUROPEAN PATENT SPECIFICATION

(11) **EP 1 979 432 B1**
(45) Date of publication and mention of the grant of the patent: **05.12.2018**
(21) Application number: 07709717.8
(22) Date of filing: 12.01.2007
(51) Int. Cl.: C09K 5/04

(54) **REFRIGERANT ADDITIVE COMPOSITIONS CONTAINING PERFLUOROPOLYETHERS**
KÜHLMITTELZUSATZ MIT PERFLUORPOLYETHERN
COMPOSITIONS ADDITIVES POUR RÉFRIGÉRANT CONTENANT DES PERFLUOROPOLYÉTHERS

(30) Priority: 13.01.2006 US 758735 P
(43) Date of publication of application: 15.10.2008
(73) Proprietor: The Chemours Company FC, LLC, Wilmington DE 19801 (US)
(72) Inventor: LECK, Thomas, J., Hockessin, Delaware 19707 (US); SATURNO, Thomas, Frank, New Castle, Delaware 19720 (US); BELL, Gregory, A., Hockessin, DE 19707 (US)
(74) Representative: Dehns
(86) International application number: PCT/US2007/000783
(87) International publication number: WO 2007/082046

(56) References cited:
- EP-A- 1 306 417
- EP-A- 1 325 949
- EP-A1- 0 432 273
- EP-A2- 1 275 678
- WO-A-02/38718

## Description

### BACKGROUND OF THE INVENTION

The present invention relates to compositions and processes for use in heat transfer, refrigeration and air-conditioning systems to improve the oil return, lubrication, energy efficiency, or reduce compressor wear, by using perfluoropolyether as an additive in the refrigerant or heat transfer fluid composition.

Lubricants have been used with the fluids in the heat transfer, refrigeration and air-conditioning systems to provide lubrication to the compressor and other moving parts and reduce compressor wear. However, not all the refrigerants or heat transfer fluids are compatible with all the lubricants. In particular, many HFC refrigerants or heat transfer fluids have poor miscibility or poor dispersibility with commonly used lubricants, such as mineral oil and alkylbenzene. Because the heat transfer fluids can not readily transport mineral oil lubricants through the heat exchangers, the lubricant oils accumulate on the surface of the heat exchange coils, resulting in poor oil return, poor heat exchange, low energy efficiency and the accelerated wear and tear of the compressors. As a result, the refrigeration and air conditioning industries have had to resort to the use of more expensive and more difficult to use synthetic lubricants such as polyolesters, polyalkylene glycols and perfluoropolyethers (see, for example, WO 02/38718 A2).

Thus, there is a need for refrigerant additives to improve oil return, lubrication, energy efficiency, or reduce compressor wear while allowing the use of conventional mineral oil with refrigerants.

### BRIEF SUMMARY OF THE INVENTION

The present invention relates to a composition including: (1) a refrigerant or heat transfer fluid selected from the group consisting of saturated fluorocarbons, unsaturated fluorocarbons, chlorofluorocarbons, hydrochlorofluorocarbons, fluoroethers, hydrocarbons, carbon dioxide, dimethyl ether, ammonia and combinations thereof, (2) a lubricant oil which is a mineral oil or synthetic oil selected from the group consisting of alkylbenzene, polyol esters, polyalkylene glycols, polyvinyl ethers, carbonates, polyalphaolefins and combinations thereof; and (3) a perfluoropolyether, wherein the amount of said perfluoropolyether is between 0.01 wt.% and 1.0 wt.% relative to said refrigerant or heat transfer fluid.

This invention further relates to methods of using the refrigeration or heat transfer fluid compositions of the present invention for producing refrigeration or heating.

This invention further relates to processes for the transfer of heat from a heat source to a heat sink wherein the compositions of the present invention serve as heat transfer fluids.

This invention further relates to processes of using the perfluoropolyether to maintain or improve the oil return, lubrication, or energy efficiency of the refrigeration, air conditioning and heat transfer system.

### DETAILED DESCRIPTION OF THE INVENTION

The refrigerants or heat transfer fluids of used in the present invention are selected from the group consisting of saturated fluorocarbons, unsaturated fluorocarbons, chlorofluorocarbons, hydrochlorofluorocarbons, fluoroethers, hydrocarbons, carbon dioxide, dimethyl ether, ammonia and combinations thereof. Preferred refrigerants or heat transfer fluids include saturated and unsaturated perfluorocarbons and hydrofluorocarbons.

Representative saturated fluorocarbon refrigerants or heat transfer fluids include tetrafluoromethane (PFC-14), hexafluoroethane (PFC-116), octafluoropropane (PFC-218), decafluorobutane (PFC-31-10), fluoromethane (HFC-41), difluoromethane (HFC-32), trifluoromethane (HFC-23), fluoroethane (HFC-161), 1,1-difluoroethane (HFC-152a), 1,1,1-trifluoroethane (HFC-143a), 1,1,1,2-tetrafluoroethane (HFC-134a), 1,1,2,2-tetrafluoroethane (HFC-134), 1,1,1,2,2-pentafluoroethane (HFC-125), 1,1,1,3,3,3-hexafluoropropane (HFC-236fa), 1,1,1,2,3,3,3-heptafluoropropane (HFC-227ea), 1,1,1,3,3-pentafluoropropane (HFC-245fa), R-404A (a blend of 44 wt. % of HFC-125, 52 wt. % of HFC-143a and 4 wt. % of HFC-134a), R-410A (a blend of 50 wt. % of HFC-32 and 50 wt. % of HFC-125), R-417A (a blend of 46.6 wt. % of HFC-125, 50 wt. % of HFC-134a and 3.4 wt. % of n-butane), R-422A (a blend of 85.1 wt. % of HFC-125, 11.5 wt. % of HFC-134a, and 3.4 wt. % of isobutane), R-407C (a blend of 23 wt. % of HFC-32, 25 wt. % of HFC-125 and 52 wt. % of HFC-134a), R-507A (a blend of 50 % R-125 and 50 % R-143a), and R-508A (a blend of 39 % HFC-23 and 61% PFC-116)

Representative unsaturated fluorocarbon refrigerants or heat transfer fluids include 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 2,3,3-trifluoro-1-propene, 3,3,3-trifluoro-1-propene, 1,1,2-trifluoro-1-propene, 1,1,3-trifluoro-1-propene, 1,2,3-trifluoro-1-propene, 1,3,3-trifluoro-1-propene, 1,1,1,2,3,4,4,4-octafluoro-2-butene, 1,1,2,3,3,4,4,4-octafluoro-1-butene, 1,1,1,2,4,4,4-heptafluoro-2-butene, 1,2,3,3,4,4,4-heptafluoro-1-butene, 1,1,1,2,3,4,4-heptafluoro-2-butene, 1,3,3,3-tetrafluoro-2-(trifluoromethyl)-2-propene, 1,1,3,3,4,4,4-heptafluoro-1-butene, 1,1,2,3,4,4,4-heptafluoro-1-butene, 1,1,2,3,3,4,4-heptafluoro-1-butene, 2,3,3,4,4,4-hexafluoro-1-butene, 1,1,1,4,4,4-hexafluoro-2-butene, 1,3,3,4,4,4-hexafluoro-1-butene, 1,2,3,4,4,4-hexafluoro-1-butene, 1,2,3,3,4,4-hexafluoro-1-butene 1,1,2,3,4,4-hexafluoro-2-butene, 1,1,1,2,3,4-hexafluoro-2-butene, 1,1,1,2,3,3-hexafluoro-2-butene, 1,1,1,3,4,4-hexafluoro-2-butene, 1,1,2,3,3,4-hexafluoro-1-butene, 1,1,2,3,4,4-hexafluoro-1-butene, 3,3,3-trifluoro-2-(trifluoromethyl)-1-propene, 1,1,1,2,4-pentafluoro-2-butene, 1,1,1,3,4-pentafluoro-2-butene, 3,3,4,4,4-pentafluoro-1-butene, 1,1,1,4,4-pentafluoro-2-butene, 1,1,1,2,3-pentafluoro-2-butene, 2,3,3,4,4-pentafluoro-1-butene, 1,1,2,4,4-pentafluoro-2-butene, 1,1,2,3,3-pentafluoro-1-butene, 1,1,2,3,4-pentafluoro-2-butene, 1,2,3,3,4-pentafluoro-1-butene, 1,1,3,3,3-pentafluoro-2-methyl-1-propene, 2-(difluoromethyl)-3,3,3-trifluoro-1-propene, 3,3,4,4-tetrafluoro-1-butene, 1,1,3,3-tetrafluoro-2-methyl-1-propene, 1,3,3,3-tetrafluoro-2-methyl-1-propene, 2-(difluoromethyl)-3,3-difluoro-1-propene, 1,1,1,2-tetrafluoro-2-butene, 1,1,1,3-tetrafluoro-2-butene, 1,1,1,2,3,4,4,5,5,5-decafluoro-2-pentene, 1,1,2,3,3,4,4,5,5,5-decafluoro-1-pentene, 1,1,1,4,4,4-hexafluoro-2-(trifluoromethyl)-2-butene, 1,1,1,2,4,4,5,5,5-nonafluoro-2-pentene, 1,1,1,3,4,4,5,5,5-nonafluoro-2-pentene, 1,2,3,3,4,4,5,5,5-nonafluoro-1-pentene, 1,1,3,3,4,4,5,5,5-nonafluoro-1-pentene, 1,1,2,3,3,4,4,5,5-nonafluoro-1-pentene, 1,1,2,3,4,4,5,5,6-nonafluoro-2-pentene, 1,1,1,2,3,4,4,5,5-nonafluoro-2-pentene, 1,1,1,2,3,4,5,5,5-nonafluoro-2-pentene, 1,2,3,4,4,4-hexafluoro-3-(trifluoromethyl)-1-butene, 1,1,2,4,4,4-hexafluoro-3-(trifluoromethyl)-1-butene, 1,1,1,4,4,4-hexafluoro-3-(trifluoromethyl)-2-butene, 1,1,3,4,4,4-hexafluoro-3-(trifluoromethyl)-1-butene, 2,3,3,4,4,5,5,5-octafluoro-1-pentene, 1,2,3,3,4,4,5,5-octafluoro-1-pentene, 3,3,4,4,4-pentafluoro-2-(trifluoromethyl)-1-butene, 1,1,4,4,4-pentafluoro-3-(trifluoromethyl)-1-butene, 1,3,4,4,4-pentafluoro-3-(trifluoromethyl)-1-butene, 1,1,4,4,4-pentafluoro-2-(trifluoromethyl)-1-butene, 1,1,1,4,4,5,5,5-octafluoro-2-pentene, 3,4,4,4-tetrafluoro-3-(trifluoromethyl)-1-butene, 3,3,4,4,5,5,5-heptafluoro-1-pentene, 2,3,3,4,4,5,5-heptafluoro-1-pentene, 1,1,3,3,5,5,5-heptafluoro-1-pentene, 1,1,1,2,4,4,4-heptafluoro-3-methyl-2-butene, 2,4,4,4-tetrafluoro-3-(trifluoromethyl)-1-butene, 1,4,4,4-tetrafluoro-3-(trifluoromethyl)-1-butene, 1,4,4,4-tetrafluoro-3-(trifluoromethyl)-2-butene, 2,4,4,4-tetrafluoro-3-(trifluoromethyl)-2-butene, 3-(trifluoromethyl)-4,4,4-trifluoro-2-butene, 3,4,4,5,5,5-hexafluoro-2-pentene, 1,1,1,4,4,4-hexafluoro-2-methyl-2-butene, 3,3,4,5,5,5-hexafluoro-1-pentene, 4,4,4-trifluoro-2-(trifluoromethyl)-1-butene, 1,1,2,3,3,4,4,5,5,6,6,6-dodecafluoro-1-hexene, 1,1,1,2,2,3,4,5,5,6,6,6-dodecafluoro-3-hexene, 1,1,1,4,4,4-hexafluoro-2,3-bis(trifluoromethyl)-2-butene, 1,1,1,4,4,5,5,5-octafluoro-2-trifluoromethyl-2-pentene, 1,1,1,3,4,5,5,5-octafluoro-4-(trifluoromethyl)-2-pentene, 1,1,1,4,5,5,5-heptafluoro-4-(trifluoromethyl)-2-pentene, 1,1,1,4,4,5,5,6,6,6-decafluoro-2-hexene, 1,1,1,2,2,5,5,6,6,6-decafluoro-3-hexene, 3,3,4,4,5,5,6,6,6-nonafluoro-1-hexene, 4,4,4-trifluoro-3,3-bis(trifluoromethyl)-1-butene, 1,1,1,4,4,4-hexafluoro-3-methyl-2-(trifluoromethyl)-2-butene, 2,3,3,5,5,5-hexafluoro-4-(trfluoromethyl)-1-pentene, 1,1,1,2,4,4,5,5,5-nonafluoro-3-methyl-2-pentene, 1,1,1,5,5,5-hexafluoro-4-(trifluoromethyl)-2-pentene, 3,4,4,5,5,6,6,6-octafluoro-2-hexene, 3,3,4,4,5,5,6,6-octafluoro-2-hexene, 1,1,1,4,4-pentafluoro-2-(trifluoromethyl)-2-pentene, 4,4,5,5,5-pentafluoro-2-(trifluoromethyl)-1-pentene, 3,3,4,4,5,5,5-heptafluoro-2-methyl-1-pentene, 1,1,1,2,3,4,4,5,5,6,6,7,7,7-tetradecafluoro-2-heptene, 1,1,1,2,2,3,4,5,5,6,6,7,7,7-tetradecafluoro-2-heptene, 1,1,1,3,4,4,5,5,6,6,7,7,7-tridecafluoro-2-heptene, 1,1,1,2,4,4,5,5,6,6,7,7,7-tridecafluoro-2-heptene, 1,1,1,2,2,4,5,5,6,6,7,7,7-tridecafluoro-3-heptene, 1,1,1,2,2,3,5,5,6,6,7,7,7-tridecafluoro-3-heptene, 4,4,5,5,6,6,6-heptafluoro-2-hexene, 4,4,5,5,6,6,6-heptafluoro-1-hexene, 1,1,1,2,2,3,4-heptafluoro-3-hexene, 4,5,5,5-tetrafluoro-4-(trifluoromethyl)-1-pentene, 1,1,1,2,5,5,5-heptafluoro-4-methyl-2-pentene, 1,1,1,3-tetrafluoro-2-(trifluoromethyl)-2-pentene, 1,2,3,3,4,4-hexafluorocyclobutene, 3,3,4,4-tetrafluorocyclobutene, 3,3,4,4,5,5-hexafluorocyclopentene, 1,2,3,3,4,4,5,5-octafluorocyclopentene, 1,2,3,3,4,4,5,5,6,6-decafluorocyclohexene, 1,1,1,2,3,4,5,5,5-nonafluoro-4-(trifluoromethyl)-2-pentene, pentafluoroethyl trifluorovinyl ether, trifluoromethyl trifluorovinyl ether.

Representative chlorofluorocarbon refrigerants or heat transfer fluids include trichlorofluoromethane (CFC-11), dichlorodifluoromethane (CFC-12), 1,1,1-trichlorotrifluoroethane (CFC-113a), 1,1,2-trichlorotrifluoroethane (CFC-113), and chloropentafluoroethane (CFC-115).

Representative hydrochlorofluorocarbon refrigerants or heat transfer fluids include chlorodifluoromethane (HCFC-22), 2-chloro-1,1,1-trifluoroethane (HCFC-123), 2-chloro-1,1,1,2-tetrafluoroethane (HCFC-124) and 1-chloro-1,1-difluoroethane (HCFC-142b).

Representative fluoroether refrigerants or heat transfer fluids include CF₃OCHF₂, CF₃OCH₃, CF₃OCH₂F, CHF₂OCHF₂, cyclo-(CF₂CF₂CF₂O-), CF₃CF₂OCH₃, CHF₂OCHFCF₃, CHF₂CF₂OCH₃, C₄F₉OCH₃, C₄F₉OC₂H₅, CF₃OCF₃, CF₃OC₂F₅, C₂F₅OC₂F₅ and CF₃OCF(CF₃)CF(CF₃)OCF₃.

Representative hydrocarbon refrigerants or heat transfer fluids include methane, ethane, propane, cyclopropane, propylene, n-butane, cyclobutane, 2-methylpropane, methylcyclopropane, n-pentane, cyclopentane, 2-methylbutane, methylcyclobutane, 2,2-dimethylpropane and dimethylcyclopropane isomers.

The present invention provides perfluoropolyethers as an additive which is miscible with chlorofluorocarbon and hydrofluorocarbon refrigerants or heat transfer fluids. A common characteristic of perfluoropolyethers is the presence of perfluoroalkyl ether moieties. Perfluoropolyether is synonymous to perfluoropolyalkylether. Other synonymous terms frequently used include "PFPE", "PFAE", "PFPE oil", "PFPE fluid", and "PFPAE". For example, KRYTOX available from DuPont is a perfluoropolyether having the formula of CF₃-(CF₂)₂-O-[CF(CF₃)-CF₂-O]j'-R'f. In the formula, j' is 2 - 100, inclusive and R'f is CF₂CF₃, a C3 to C6 perfluoroalkyl group , or combinations thereof.

Other PFPEs including the FOMBLIN and GALDEN fluids, available from Ausimont, Milan, Italy and produced by perfluoroolefin photooxidation, can also be used. FOMBLIN-Y can have the formula of CF₃O(CF₂CF(CF₃)-O-)_{m'}(CF₂-O-)_{n'}-R_{1f}. Also suitable is CF₃O[CF₂CF(CF₃)O]_{m'}(CF₂CF₂O)_{o'}(CF₂O)_{n'}-R_{1f}. In the formulae R_{1f} is CF₃, C₂F₅, C₃F₇, or combinations of two or more thereof ; (m' + n') is 8 - 45, inclusive; and m/n is 20 - 1000, inclusive; o' is 1; (m'+n'+o') is 8 - 45, inclusive; m'/n' is 20 - 1000, inclusive.

FOMBLIN-Z can have the formula of CF₃O(CF₂CF₂-O-)_{p'}(CF₂-O)_{q'}CF₃ where (p' + q') is 40 - 180 and p'/q' is 0.5 - 2, inclusive.

DEMNUM fluids, another family of PFPE available from Daikin Industries, Japan, can also be used. It can be produced by sequential oligomerization and fluorination of 2,2,3,3-tetrafluorooxetane, yielding the formula of F-[(CF₂)₃-O]_{t'}-R_{2f} where R_{2f} is CF₃, C₂F₅, or combinations thereof and t' is 2 - 200, inclusive.

The two end groups of the perfluoropolyether, independently, can be functionalized or unfunctionalized. In an unfunctionalized perfluoropolyether, the end group can be branched or straight chain perfluoroalkyl radical end groups. Examples of such perfluoropolyethers can have the formula of C_{r'}F_{(2r'+1)}-A-C_{r'}F_{(2r'+1)} in which each r' is independently 3 to 6; A can be O-(CF(CF₃)CF₂-O)_{w'}, O-(CF₂-O)_{x'}(CF₂CF₂-O)_{y'}, O-(C₂F₄-O)_{w'}, O-(C₂F₄-O)_{x'}(C3F₆-O)_{y'}, O-(CF(CF₃)CF₂-O)_{x'}(CF₂-O)_{y'}, O-(CF₂CF₂CF₂-O)_{w'}, O-(CF(CF₃)CF₂-)O_{x'}(CF₂CF₂-O)_{y'}-(CF₂-O)_{z'}, or combinations of two or more thereof; preferably A is O-(CF(CF₃)CF₂-O)_{w'}, O-(C₂F₄-O)_{w'}, O-(C₂F₄-O)_{x'}(C₃F₆-O)_{y'}, O-(CF₂CF₂CF₂-O)_{w'}, or combinations of two or more thereof; w' is 4 to 100; x' and y' are each independently 1 to 100. Specific examples include, but are not limited to, F(CF(CF₃)-CF₂-O)₉-CF₂CF₃, F(CF(CF₃)-CF₂-O)₃-CF(CF₃)₂, and combinations thereof. In such PFPEs, up to 30% of the halogen atoms can be halogens other than fluorine, such as, for example, chlorine atoms.

The two end groups of the perfluoropolyether, independently, can also be functionalized. A typical functionalized end group can be selected from the group consisting of esters, hydroxyls; amines, amides, cyanos, carboxylic acids and sulfonic acids

Representative ester end groups include -COOCH₃, -COOCH₂CH₃, -CF₂COOCH₃, -CF₂COOCH₂CH₃, -CF₂CF₂COOCH₃,-CF₂CF₂COOCH₂CH₃, -CF₂CH₂COOCH₃, -CF₂CF₂CH₂COOCH₃,-CF₂CH₂CH₂COOCH₃, -CF₂CF₂CH₂CH₂COOCH₃.

Representative hydroxyl end groups include -CF₂OH, -CF₂CF₂OH, -CF₂CH₂OH, -CF₂CF₂CH₂OH, -CF₂CH₂CH₂OH, -CF₂CF₂CH₂CH₂OH.

Representative amine end groups include -CF₂NR¹R²,-CF₂CF₂NR¹R², -CF₂CH₂NR¹R², -CF₂CF₂CH₂NR¹R², -CF₂CH₂CH₂NR¹R², - CF₂CF₂CH₂CH₂NR¹R², wherein R¹ and R² are independently H, CH₃, or CH₂CH₃.

Representative amide end groups include -CF₂C(O)NR¹R², - CF₂CF₂C(O)NR¹R², -CF₂CH₂O(O)NR¹R², -CF₂CF₂CH₂C(O)NR¹R², - CF₂CH₂CH₂C(O)NR¹R², -CF₂CF₂CH₂CH₂C(O)NR¹R², wherein R¹ and R² are independently H, CH₃, or CH₂CH₃.

Representative cyano end groups include -CF₂CN, -CF₂CF₂CN, - CF₂CH₂CN, -CF₂CF₂CH₂CN, -CF₂CH₂CH₂CN, -CF₂CF₂CH₂CH₂CN.

Representative carboxylic acid end groups include -CF₂COOH, - CF₂CF₂COOH, -CF₂CH₂COOH, -CF₂CF₂CH₂COOH, -CF₂CH₂CH₂COOH, - CF₂CF₂CH₂CH₂COOH.

Representative sulfonic acid end groups include -S(O)(O)OR³,-S(O)(O)R⁴, -CF₂O S(O)(O)OR³, -CF₂CF₂O S(O)(O)OR³, -CF₂CH₂O S(O)(O)OR³, -CF₂CF₂CH₂O S(O)(O)OR³, -CF₂CH₂CH₂O S(O)(O)OR³,-CF₂CF₂CH₂CH₂O S(O)(O)OR³, -CF₂ S(O)(O)OR³, -CF₂CF₂ S(O)(O)OR³,-CF₂CH₂ S(O)(O)OR³, -CF₂CF₂CH₂ S(O)(O)OR³, -CF₂CH₂CH₂ S(O)(O)OR³, -CF₂CF₂CH₂CH₂ S(O)(O)OR³, -CF₂O S(O)(O)R⁴, -CF₂CF₂O S(O)(O)R⁴, -CF₂CH₂O S(O)(O)R⁴, -CF₂CF₂CH₂O S(O)(O)R⁴,-CF₂CH₂CH₂O S(O)(O)R⁴, -CF₂CF₂CH₂CH₂O S(O)(O)R⁴, wherein R³ is H, CH₃, CH₂CH₃, CH₂CF₃, CF₃, or CF₂CF₃, R⁴ is CH₃, CH₂CH₃, CH₂CF₃, CF₃, or CF₂CF₃.

The refrigerant-lubricant oil-perfluoropolyether additive combination of this invention improves performance of refrigeration, air conditioning and heat transfer system in one or more aspects. In one aspect, it enables adequate oil return to the compressor such that oil levels are maintained at the proper operating level by preventing accumulation of oil in the heat exchanger coils. In another aspect, the refrigerant-perfluoropolyether also improves lubrication performance of mineral oil and synthetic lubricant oils. In yet another aspect, the refrigerant-perfluoropolyether also improves heat transfer efficiency and thus the energy efficiency. The refrigerant-perfluoropolyether has also been shown to reduce friction and wear in boundary lubrication, which is expected to result in longer compressor life. The advantages listed above are not intended to be exhausting.

Reference to "an effective amount of perfluoropolyether" in this application means an amount of perfluoropolyether additive to provide sufficient oil return to the compressor in order to maintain or improve lubrication or energy efficiency performance or both, where said amount of perfluoropolyether is adjusted by one of ordinary skill to a level appropriate to the individual refrigeration/heat transfer system (coil, compressor, etc.) and refrigerant employed.

In this invention, the amount of perfluoropolyether is between 0.01 wt.% and 1.0 wt.% relative to the refrigerant or heat transfer fluid. Most preferably, the perfluoropolyether additive is between 0.03 and 0.80 wt.% relative to the refrigerant or heat transfer fluid.

The compositions of the present invention may further comprise about 0.01 weight percent to about 5 weight percent of a stabilizer, free radical scavenger or antioxidant. Such other additives include but are not limited to, nitromethane, hindered phenols, hydroxylamines, thiols, phosphites, or lactones. Single additives or combinations may be used.

Optionally, commonly used refrigeration or air-conditioning system additives may be added, as desired, to compositions of the present invention in order to enhance performance and system stability. These additives are known in the field of refrigeration and air-conditioning, and include, but are not limited to, anti wear agents, extreme pressure lubricants, corrosion and oxidation inhibitors, metal surface deactivators, free radical scavengers, and foam control agents. In general, these additives may be present in the inventive compositions in small amounts relative to the overall composition. Typically concentrations of from less than about 0.1 weight percent to as much as about 3 weight percent of each additive are used. These additives are selected on the basis of the individual system requirements. These additives include members of the triaryl phosphate family of EP (extreme pressure) lubricity additives, such as butylated triphenyl phosphates (BTPP), or other alkylated triaryl phosphate esters, e.g. Syn-0-Ad 8478 from Akzo Chemicals, tricresyl phosphates and related compounds. Additionally, the metal dialkyl dithiophosphates (e.g. zinc dialkyl dithiophosphate (or ZDDP), Lubrizol 1375 and other members of this family of chemicals may be used in compositions of the present invention. Other antiwear additives include natural product oils and asymmetrical polyhydroxyl lubrication additives, such as Synergol TMS (International Lubricants). Similarly, stabilizers such as anti oxidants, free radical scavengers, and water scavengers may be employed. Compounds in this category can include, but are not limited to, butylated hydroxy toluene (BHT) and epoxides.

Lubricants used in this invention include natural and synthetic lubricant oils. The natural lubricant oil is a mineral oil. Synthetic lubricant oils are selected from alkylbenzene, polyol esters, polyalkylene glycols, polyvinyl ethers, carbonates and polyalphaolefins.

In one embodiment of this invention, the amount of perfluoropolyether is less than 50% by weight relative to the mineral oil.

Preferably, the amount of perfluoropolyether is less than 20% by weight relative to the mineral oil. More preferably, the amount of perfluoropolyether is less than 5% by weight relative to the mineral oil. Most preferably, the amount of perfluoropolyether is less than 3 wt.% relative to the mineral oil.

In one embodiment of this invention, the refrigeration or heat transfer fluid composition comprises a mineral oil, perfluoropolyether, and a refrigeration or heat transfer fluid selected from the group consisting of R-407C, R-422A, R-417A, R-404A, R-410A, R-507A, R-508A, R-422A, R-417A, and HFC-134a.

In another embodiment of this invention, the refrigeration or heat transfer fluid composition comprises a perfluoropolyether and an unsaturated fluorocarbon such as 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 1,1,1,2,3,4,4,4-octafluoro-2-butene, 1,1,1,2,4,4,4-heptafluoro-2-butene, or 1,1,1,4,4,4-hexafluoro-2-butene.

The present invention further relates to a method of using the refrigeration or heat transfer fluid compositions of the present invention for producing refrigeration or heating, wherein the method comprises producing refrigeration by evaporating said composition in the vicinity of a body to be cooled and thereafter condensing said composition; or producing heat by condensing said composition in the vicinity of the body to be heated and thereafter evaporating said composition.

The present invention further relates to a process for transfer of heat from a heat source to a heat sink wherein the compositions of the present invention serve as heat transfer fluids. Said process for heat transfer comprises transferring the compositions of the present invention from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

The present invention further relates to a method of using the perfluoropolyether to maintain or improve the oil return, lubrication, or energy efficiency of the refrigeration, air conditioning and heat transfer system. The method comprises adding an effective amount of perfluoropolyether into the refrigeration or air-conditioning apparatus. This may be done by mixing the perfluoropolyether with the refrigerant or heat transfer fluid compositions of this invention and then introducing the combination into the apparatus. Alternatively, this may be done by directly introducing perfluoropolyether into refrigeration or air-conditioning apparatus containing refrigerant and/or heat transfer fluid to combine in situ with the refrigerant. The resulting composition may be used in the refrigeration or air-conditioning apparatus.

The present invention further relates to a method of using the perfluoropolyether to maintain or improve the oil return, lubrication, or energy efficiency by replacing the existing refrigerants or heat transfer fluids without changing the existing lubricants in the refrigeration or air-conditioning apparatus. The method comprises removing the existing refrigerant or heat transfer fluid from the refrigeration or air-conditioning apparatus without flushing out the existing lubricant. Said refrigeration or air-conditioning apparatus is then filled with a pre-mixed composition comprising perfluoropolyether and the refrigerant or heat transfer fluid compositions of this invention.

The compositions of the present invention may be used in stationary air-conditioning, heat pumps or mobile air-conditioning and refrigeration systems. Stationary air-conditioning and heat pump applications include window, ductless, ducted, packaged terminal, chillers and commercial, including packaged rooftop. Refrigeration applications include domestic or home refrigerators and freezers, ice machines, self-contained coolers and freezers, walk-in coolers and freezers and supermarket systems, and transport refrigeration systems.

In one embodiment of this invention, the compositions of the present invention (for example, a composition comprising a mineral oil, perfluoropolyether, and a refrigeration or heat transfer fluid selected from the group consisting of R-407C, R-422A, R-417A, R-404A, R-410A, R-507A, R-508A, and HFC-134a) can be used in a heat pump with "internally enhanced heat transfer surfaces", i.e. heat pumps with fine grooves cut in a spiral or cross hatch pattern on the inside surface of the tube.

As demonstrated by the Examples below, the addition of perfluoropolyether into the refrigerant increased the oil return or energy efficiency or cooling capacity of the refrigerator and heat transfer system. In one preferred embodiment of the invention, Krytox® 157FSH is sufficiently miscible with HFC refrigerants including R-134a, R-125, R-32 such that the Krytox® can be blended with the refrigerant blend and charged to the refrigeration or air conditioning apparatus as a homogeneous liquid.

### EXAMPLES

### EXAMPLE 1

Miscibility of 1,1,1,2-tetrafluoroethane (HFC-134a) with representative members of the family of Krytox® perfluoropolyethers, including Krytox® 1531, Krytox® GPL-103, Krytox® 157 FSM, and Krytox® 143AZ was demonstrated by adding 1.0 gram of the PFPE to individual glass high pressure chemical bottles. Each bottle was fitted with a sealed addition valve which could be coupled to a pressure burette from which liquefied refrigerant could be added to the bottle. This was followed by adding aliquots of HFC-134a, first one gram, then about 2 grams per additional aliquot, to yield higher and higher mixing ratios of the HFC, up to a maximum of 99 grams of HFC-134a in each bottle. After each aliquot was added the bottle and its contents were swirled to mix, then observed for indication of sign of insolubility, such as the formation of haze, cloudiness, or a second liquid layer. In every case the contents of the bottle remained as one single clear liquid phase at all compositions. This showed that at room temperature, each of the perfluoropolyethers was fully soluble in the HFC-134a over a range of mixing ratios ranging 50 % to about 1 % in HFC-134a.

### EXAMPLE 2 (Comparative)

Baseline Refrigeration Oil Circulation tests were run in a commercial type reach-in refrigerator manufactured by Zero Zone, Inc. of 110 North Oak Ridge Drive, North Prairie, WI, Model # 2SMCP26. The Copeland compressor in the unit (Copeland Model # ARE59C3CAA-901) was fitted with an oil level indicating tube (sight glass) which showed the level of lubricating oil in the crank case of the compressor. The refrigerator was installed in a constant temperature room in which the room temperature was regulated at a constant 90°F (32°C). In base line ran with R-22 (chlorodifluoromethane) and Suniso 4GS mineral oil, the oil level in the compressor remained constant after a small initial decrease at startup, indicating that the oil which left the compressor with the refrigerant circulated through the system and came back with the suction gas, and thereby a constant, steady state level of oil was maintained within the compressor crank case. This constant oil level assured adequate lubrication and sealing of compressor internal parts, while some small amount of oil which left the compressor with the compressed refrigerant gas circulated through the condenser, the thermal expansion valve, and the evaporator coil before returning to the compressor with the suction gas. This was indicative of normal operation of the cooling loop. Through out the duration of this 24-hour test the refrigerator maintained a constant temperature of 37°F (2.8 °C) in the cooling zone.

### EXAMPLE 3 (Comparative)

The same kind of oil circulation test as described in Example 2 above was run, only this time the R-22 (chlorodifluoromethane) refrigerant had been removed and replaced with Refrigerant R-422A, a blend of HFC-125 (85.1 wt. %), HFC-134a (11.5 wt. %), and isobutane (3.4 wt. %). When this refrigerant ran in the Zero Zone refrigerator, the level of oil in the crankcase steadily decreased with time as the system operated to maintain a standard temperature of 37°F (2.8 °C) in the refrigerated case. In a period of six hours, the oil level had dropped to the minimum allowable level within the crankcase, and the run had to be terminated to prevent compressor damage. This showed that with this combination of refrigerant and lubricant, the lubricant slowly got pumped out of the compressor and did not return.

### EXAMPLE 4

After the oil return test described in Example 3 above was completed, the refrigerant system was flushed with R-22 (chlorodifluoromethane) to remove the excess oil from the heat exchangers, and normal base line operation was demonstrated with R-22. After the baseline re-check, once again the refrigerant R-22 was removed and replaced again with a fresh charge of R-422A and Suniso 4GS mineral oil as above, to which a small amount, equivalent to about 0.1% by weight, relative to the refrigerant charge, of the Krytox® Perfluoropolyether GPL-101 was added. The refrigerator was re-started and allowed to run as described in Example 3 above. Surprisingly, the system ran with adequate oil showing in the sight glass for 18 hours, three times longer than in Example 3, which had no added perfluoropolyether.

### EXAMPLE 5

After the oil return test described in Example 4 above was completed, the refrigerant system was flushed with R-22 to remove the excess oil and any remaining perfluoropolyether from the heat exchangers, and normal base line operation was demonstrated with R-22 and Suniso 4GS mineral oil. After the baseline re-check, once again the refrigerant R-22 was removed and replaced again with a fresh charge of R-422A and Suniso 4GS mineral oil as above, to which a small amount, equivalent to about 0.1 % by weight, relative to the refrigerant charge, of the Krytox® Perfluoropolyether 157FSL was added. The refrigerator was re-started and allowed to run as described in Example 3 above. Surprisingly, the system ran with adequate oil showing in the sight glass for 24 hours, four times longer than in Example 3, which had no added perfluoropolyether. There was still an adequate oil level showing in the sight glass when the run was terminated.

### EXAMPLE 6 (Comparative)

The ZeroZone commercial reach in refrigerator described above was re-fitted with a thermal expansion valve to allow it to operate with the HFC refrigerant R-404A (a blend of 44 wt. % of HFC-125, 52 wt. % of HFC-143a and 4 wt. % of HFC-134a) and Suniso 4GS mineral oil. This refrigerator was operated at an internal box temperature of 38°F (3.3 °C) while energy consumption was monitored. As before, the test was conducted with the refrigerator in a constant temperature room that was controlled at a constant temperature of 90°F (32°C). During a three-hour test period the power consumption of the refrigerator was measured to be at a rate of 22.65 Kilowatt hours per day.

### EXAMPLE 7

The Test set up described in example 6 above was modified by removing the refrigerant charge, and re-charging with a mixture of refrigerant R-404A and Suniso 4GS mineral oil which contained 0.2% by weight, relative to the refrigerant charge, of Krytox® 157 FSH. The test chamber was stabilized again at 90°F (32°C), and the refrigerator was allowed to operate. Over a three-hour period the internal box temperature was maintained at 37.6°F (3.1 °C). The average power use by the refrigerator during this test period was measured to be at a rate of 21.83 Kilowatt hours per day. This was 3.6 % less power usage than was measured in Example 6, when no Krytox® was in the refrigerant.

### EXAMPLE 8

Boundary Layer Lubrication tests were run using a FALEX Pin on vee-block test geometry, according to test protocol based on the ASTM 2670-95 Load to Failure test method. In this test, a rotating steel pin was squeezed between two standard blocks of aluminum metal. The aluminum blocks were made with vee shaped notches in them, and they were mounted in a bracket such that the vee notches contacted the steel pin. The pin and block assembly was immersed in a pan of lubricant and a motor coupled through a torque meter rotated the pin. The blocks were adjusted to lightly contact the surface of the rotating pin at a low load of 250 lbs (114 kg) pressure for an initial run-in period of five minutes. The force load applied to the blocks was then increased slowly at a steady rate of 200 pounds (91 kg) per minute by a mechanical tightener that squeezed the rotating pin between the two vee blocks. The load was increased to a predetermined limit, or until a mechanical failure of one of the test pieces occurred. With pure Suniso 4GS mineral oil, the test failed within the first minute, while the mechanical load on the pin and block assembly was only 250 lbs (114 kg). Surprisingly, when this test was repeated with a mixture of 0.5% by weight of Krytox® 157 FSL dispersed in the Suniso 4GS mineral oil, the test continued to run for 9 minutes, during which time the mechanical load increased to a level of 2100 lbs (955 kg). By this time the mechanical parts had not failed, but the level of smoke being generated became excessive, so the test was terminated. This showed that the presence of small amount of Krytox® 157 FSL dispersed in the mineral oil increased the load carrying ability of the mineral oil at boundary lubrication conditions by more than 800 %.

### EXAMPLE 9

A split system Carrier heat pump was used to evaluate refrigerant and lubricant performance in air conditioning and heating modes. The system consisted of a condensing unit, Model 38YXA03032, and an evaporator Unit, Model FX4ANF030, and was rated at a nominal cooling capacity of 2 ½ tons of cooling with R-410A. The system was operated inside of a dual chamber psychrometric chamber, with one chamber regulated at outdoor conditions per standard ARI 210/240 Cooling A test conditions, and the other chamber regulated at Cooling A indoor test conditions. This unit was also modified so that the compressor could be changed from the standard R-410A rated compressor to a compressor sized for operation with R-407C. In the tests cited in Table 1 below, runs 1,2, and 3 were made using the R-410A compressor. Runs 4, 5, 6, and 7 were made with the R-407C compressor.

The copper tubing in the evaporator and condenser coils of this air conditioning system came from the factory with a feature called "internally enhanced heat transfer surfaces", a feature which is generally known and used throughout the industry. This feature includes fine grooves cut in a spiral or cross hatch pattern on the inside surface of the tube. These grooves cause disruption of the laminar flow layers near the tube surface. The result of this disruption is believed to be improved heat transfer from the evaporating refrigerant within the copper tubes to the tubes themselves and the attached fins that comprise the evaporator unit. Heat transfer to the air flowing through the fins of the evaporator is believed to be thereby improved, with the creation of a more energy efficient air conditioning or heating process. Again, the use of internally enhanced tube surfaces is well known and widely applied within the air conditioning and heat pump industries. Most higher efficiency systems employ enhanced surface tubing in evaporators and condensers.

It has been observed that when a lubricant that is not miscible with the refrigerant is used in such an enhanced system, that the performance improvement normally imparted by the enhanced tube surface is lost. It is believed that the non-miscible lubricant is drawn into the fine grooves by capillary action, effectively creating a smoother surface. This smoother surface is believed to cause at least a partial return to the less efficient laminar flow of the refrigerant within the tube. Further, the layer of oil on the tube surface is believed to reduces the ability of the copper tube to allow heat transfer, further reducing operating efficiency. As shown in Table 1, the addition of a small amount of PFPE to the refrigerant in our heat pump system will substantially reduce the deficit in performance which results from the use of a non miscible lubricant, such as mineral oil, with an HFC refrigerant such as R-410A or R-407C. This ability of the heat pump to operate with HFC refrigerant and non miscible mineral oil with excellent efficiency is shown by the data in Table 1 below.

| Table 1 | | | | | | | |
|---|---|---|---|---|---|---|---|
| Impact of adding PFPE to Carrier Heat Pump | | | | | | | |
| Run # | Refrigerant | Lubricant | Additive | EER | EER Delta vs. POE | Capacity kBTU/h | Capacity Delta vs. POE |
| 1 | 410A | 32-3MA | none | 12.8 | | 28.6 | |
| 2 | 410A | 3GS | none | 11.1 | 87.2 | 25.0 | 87.4 |
| 3 | 410A | 3GS | 0.2% 157 FSL | 12.5 | 97.9 | 28.1 | 98.5 |
| | | | | | | | |
| 4 | R-407C | RL32H | none | 11.2 | | 27.8 | |
| 5 | R-407C | 3GS | none | 10.8 | 96.7 | 26.6 | 95.5 |
| 6 | R-407C | 3GS | 1% 157 FSL | 11.0 | 98.3 | 27.6 | 99.0 |
| 7 | R-407C | RL32H | 1% 157 FSL | 11.3 | 101.0 | 27.6 | 99.2 |

Note that in this table the lubricants "32-3MA" and "RL32H" are commercial POE lubricants used in Carrier air conditioning systems. These POE lubricants are miscible with the refrigerants used in the example. The lubricant 3GS is a commercial naphthenic mineral oil available from Sonneborn, Inc. The mineral oil lubricant is not miscible with HFC refrigerants.

In Table 1, note that when the non miscible lubricant Suniso 3GS, a mineral oil, is used with HFC refrigerant R-410A, (Run #2) the EER is reduced by 12.8 %, and the capacity reduced by 12.6 %, versus Run #1 with POE lubricant. However, when a small amount of the PFPE Krytox® 157 FSL is added to the refrigerant (Run #3) that the EER is restored to within about 2.1 % of that achieved with POE, and the capacity is restored to within about 1.5 % of that achieved with POE. The deficits caused by the use of the non-miscible mineral oil are almost completely eliminated by the use of PFPE.

Further note in Table 1 that with HFC refrigerant R-407C, when mineral oil is used the efficiency and capacity are reduced by about 3.3% and 4.5%, respectively versus POE. (Runs 4 and 5). In Run #6 it is seen that the addition of 1% Krytox® 157 FSL increases the EER and capacity to within 1.7% and 1.0%, respectively, of the values obtained with the POE lubricant. Again, the deficits caused by using non-miscible lubricant are largely eliminated by the use of the PFPE.

Finally note that when Krytox 157 FSL was added to the R-407C and POE system (Run 6) that the EER was improved to be 1 % better than that obtained in Run 4 with no PFPE, and the capacity was within 1% of Run 4, the POE baseline case.

## Claims

1. A composition comprising:
1) a refrigerant or heat transfer fluid selected from the group consisting of saturated fluorocarbons, unsaturated fluorocarbons, chlorofluorocarbons, hydrochlorofluorocarbons, fluoroethers, hydrocarbons, carbon dioxide, dimethyl ether, ammonia and combinations thereof,
2) a lubricant oil which is a mineral oil or synthetic oil selected from the group consisting of alkylbenzene, polyol esters, polyalkylene glycols, polyvinyl ethers, carbonates, polyalphaolefins and combinations thereof; and
3) a perfluoropolyether, wherein the amount of said perfluoropolyether is between 0.01 wt.% and 1.0 wt.% relative to said refrigerant or heat transfer fluid.

2. The composition of claim 1 wherein at least one of the end groups of said perfluoropolyether is a functionalized group selected from the group consisting of esters, hydroxyls, amines, amides, cyanos, carboxylic acids and sulfonic acids.

3. The composition of claim 2 wherein at least one of the end groups of said perfluoropolyether is carboxylic acid.

4. The composition of claim 2 wherein at least one of the end groups of said perfluoropolyether is sulfonic acid.

5. The composition of claim 1, wherein at least one of the two end groups of the perfluoropolyether is an unfunctionalized branched or straight chain perfluoroalkyl radical.

6. The composition of claim 1 wherein said refrigerant or heat transfer fluid is an unsaturated fluorocarbon.

7. The composition of claim 6 wherein said refrigerant or heat transfer fluid is selected from the group consisting of 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 2,3,3-trifluoro-1-propene, 3,3,3-trifluoro-1-propene, 1,1,2-trifluoro-1-propene, 1,1,3-trifluoro-1-propene, 1,2,3-trifluoro-1-propene, 1,3,3-trifluoro-1-propene, 1,1,1,2,3,4,4,4-octafluoro-2-butene, 1,1,2,3,3,4,4,4-octafluoro-1-butene, 1,1,1,2,4,4,4-heptafluoro-2-butene, 1,2,3,3,4,4,4-heptafluoro-1-butene, 1,1,1,2,3,4,4-heptafluoro-2-butene, 1,3,3,3-tetrafluoro-2-(trifluoromethyl)-2-propene, 1,1,3,3,4,4,4-heptafluoro-1-butene, 1,1,2,3,4,4,4-heptafluoro-1-butene, 1,1,2,3,3,4,4-heptafluoro-1-butene, 2,3,3,4,4,4-hexafluoro-1-butene, 1,1,1,4,4,4-hexafluoro-2-butene, 1,3,3,4,4,4-hexafluoro-1-butene, 1,2,3,4,4,4-hexafluoro-1-butene, 1,2,3,3,4,4-hexafluoro-1-butene 1,1,2,3,4,4-hexafluoro-2-butene, 1,1,1,2,3,4-hexafluoro-2-butene, 1,1,1,2,3,3-hexafluoro-2-butene, 1,1,1,3,4,4-hexafluoro-2-butene, 1,1,2,3,3,4-hexafluoro-1-butene, 1,1,2,3,4,4-hexafluoro-1-butene, 3,3,3-trifluoro-2-(trifluoromethyl)-1-propene, 1,1,1,2,4-pentafluoro-2-butene, 1,1,1,3,4-pentafluoro-2-butene, 3,3,4,4,4-pentafluoro-1-butene, 1,1,1,4,4-pentafluoro-2-butene, 1,1,1,2,3-pentafluoro-2-butene, 2,3,3,4,4-pentafluoro-1-butene, 1,1,2,4,4-pentafluoro-2-butene, 1,1,2,3,3-pentafluoro-1-butene, 1,1,2,3,4-pentafluoro-2-butene, 1,2,3,3,4-pentafluoro-1-butene, 1,1,3,3,3-pentafluoro-2-methyl-1-propene, 2-(difluoromethyl)-3,3,3-trifluoro-1-propene, 3,3,4,4-tetrafluoro-1-butene, 1,1,3,3-tetrafluoro-2-methyl-1-propene, 1,3,3,3-tetrafluoro-2-methyl-1-propene, 2-(difluoromethyl)-3,3-difluoro-1-propene, 1,1,1,2-tetrafluoro-2-butene, 1,1,1,3-tetrafluoro-2-butene, 1,1,1,2,3,4,4,5,5,5-decafluoro-2-pentene, 1,1,2,3,3,4,4,5,5,5-decafluoro-1-pentene, 1,1,1,4,4,4-hexafluoro-2-(trifluoromethyl)-2-butene, 1,1,1,2,4,4,5,5,5-nonafluoro-2-pentene, 1,1,1,3,4,4,5,5,5-nonafluoro-2-pentene, 1,2,3,3,4,4,5,5,5-nonafluoro-1-pentene, 1,1,3,3,4,4,5,5,5-nonafluoro-1-pentene, 1,1,2,3,3,4,4,5,5-nonafluoro-1-pentene, 1,1,2,3,4,4,5,5,5-nonafluoro-2-pentene, 1,1,1,2,3,4,4,5,5-nonafluoro-2-pentene, 1,1,1,2,3,4,5,5,5-nonafluoro-2-pentene, 1,2,3,4,4,4-hexafluoro-3-(trifluoromethyl)-1-butene, 1,1,2,4,4,4-hexafluoro-3-(trifluoromethyl)-1-butene, 1,1,1,4,4,4-hexafluoro-3-(trifluoromethyl)-2-butene, 1,1,3,4,4,4-hexafluoro-3-(trifluoromethyl)-1-butene, 2,3,3,4,4,5,5,5-octafluoro-1-pentene, 1,2,3,3,4,4,5,5-octafluoro-1-pentene, 3,3,4,4,4-pentafluoro-2-(trifluoromethyl)-1-butene, 1,1,4,4,4-pentafluoro-3-(trifluoromethyl)-1-butene, 1,3,4,4,4-pentafluoro-3-(trifluoromethyl)-1-butene, 1,1,4,4,4-pentafluoro-2-(trifluoromethyl)-1-butene, 1,1,1,4,4,5,5,5-octafluoro-2-pentene, 3,4,4,4-tetrafluoro-3-(trifluoromethyl)-1-butene, 3,3,4,4,5,5,5-heptafluoro-1-pentene, 2,3,3,4,4,5,5-heptafluoro-1-pentene, 1,1,3,3,5,5,5-heptafluoro-1-pentene, 1,1,1,2,4,4,4-heptafluoro-3-methyl-2-butene, 2,4,4,4-tetrafluoro-3-(trifluoromethyl)-1-butene, 1,4,4,4-tetrafluoro-3-(trifluoromethyl)-1-butene, 1,4,4,4-tetrafluoro-3-(trifluoromethyl)-2-butene, 2,4,4,4-tetrafluoro-3-(trifluoromethyl)-2-butene, 3-(trifluoromethyl)-4,4,4-trifluoro-2-butene, 3,4,4,5,5,5-hexafluoro-2-pentene, 1,1,1,4,4,4-hexafluoro-2-methyl-2-butene, 3,3,4,5,5,5-hexafluoro-1-pentene, 4,4,4-trifluoro-2-(trifluoromethyl)-1-butene, 1,1,2,3,3,4,4,5,5,6,6,6-dodecafluoro-1-hexene, 1,1,1,2,2,3,4,5,5,6,6,6-dodecafluoro-3-hexene, 1,1,1,4,4,4-hexafluoro-2,3-bis(trifluoromethyl)-2-butene, 1,1,1,4,4,5,5,5-octafluoro-2-trifluoromethyl-2-pentene, 1,1,1,3,4,5,5,5-octafluoro-4-(trifluoromethyl)-2-pentene, 1,1,1,4,5,5,5-heptafluoro-4-(trifluoromethyl)-2-pentene, 1,1,1,4,4,5,5,6,6,6-decafluoro-2-hexene, 1,1,1,2,2,5,5,6,6,6-decafluoro-3-hexene, 3,3,4,4,5,5,6,6,6-nonafluoro-1-hexene, 4,4,4-trifluoro-3,3-bis(trifluoromethyl)-1-butene, 1,1,1,4,4,4-hexafluoro-3-methyl-2-(trifluoromethyl)-2-butene, 2,3,3,5,5,5-hexafluoro-4-(trifluoromethyl)-1-pentene, 1,1,1,2,4,4,5,5,5-nonafluoro-3-methyl-2-pentene, 1,1,1,5,5,5-hexafluoro-4-(trifluoromethyl)-2-pentene, 3,4,4,5,5,6,6,6-octafluoro-2-hexene, 3,3,4,4,5,5,6,6-octafluoro-2-hexene, 1,1,1,4,4-pentafluoro-2-(trifluoromethyl)-2-pentene, 4,4,5,5,5-pentafluoro-2-(trifluoromethyl)-1-pentene, 3,3,4,4,5,5,5-heptafluoro-2-methyl-1-pentene, 1,1,1,2,3,4,4,5,5,6,6,7,7,7-tetradecafluoro-2-heptene, 1,1,1,2,2,3,4,5,5,6,6,7,7,7-tetradecafluoro-2-heptene, 1,1,1,3,4,4,5,5,6,6,7,7,7-tridecafluoro-2-heptene, 1,1,1,2,4,4,5,5,6,6,7,7,7-tridecafluoro-2-heptene, 1,1,1,2,2,4,5,5,6,6,7,7,7-tridecafluoro-3-heptene, 1,1,1,2,2,3,5,5,6,6,7,7,7-tridecafluoro-3-heptene, 4,4,5,5,6,6,6-heptafluoro-2-hexene, 4,4,5,5,6,6,6-heptafluoro-1-hexene, 1,1,1,2,2,3,4-heptafluoro-3-hexene, 4,5,5,5-tetrafluoro-4-(trifluoromethyl)-1-pentene, 1,1,1,2,5,5,5-heptafluoro-4-methyl-2-pentene, 1,1,1,3-tetrafluoro-2-(trifluoromethyl)-2-pentene, 1,2,3,3,4,4-hexafluorocyclobutene, 3,3,4,4-tetrafluorocyclobutene, 3,3,4,4,5,5-hexafluorocyclopentene, 1,2,3,3,4,4,5,5-octafluorocyclopentene, 1,2,3,3,4,4,5,5,6,6-decafluorocyclohexene, 1,1,1,2,3,4,5,5,5-nonafluoro-4-(trifluoromethyl)-2-pentene, pentafluoroethyl trifluorovinyl ether, trifluoromethyl trifluorovinyl ether.

8. The composition of claim 7 wherein said refrigerant or heat transfer fluid is selected from the group consisting of 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 1,1,1,2,3,4,4,4-octafluoro-2-butene, 1,1,1,2,4,4,4-heptafluoro-2-butene and 1,1,1,4,4,4-hexafluoro-2-butene.

9. A method of producing refrigeration, said method comprising:
evaporating the refrigerant or heat transfer fluid composition of claim 1 in the vicinity of a body to be cooled and thereafter condensing said composition.

10. A method of producing heat, said method comprising: condensing the refrigerant or heat transfer fluid composition of claim 1 in the vicinity of the body to be heated and thereafter evaporation said composition.

11. A process for transferring heat, said process comprising transferring the compositions of claim 1 from a heat source to a heat sink.

12. A process for replacing refrigerant or heat transfer fluid, comprising:
removing existing refrigerant or heat transfer fluid from the refrigeration or air conditioning system, and introducing into said refrigeration or air conditioning system a composition comprising:
a) a substituting refrigerant or heat transfer fluid selected from the group consisting of saturated fluorocarbons, unsaturated fluorocarbons, hydrochlorofluorocarbons, fluoroethers, hydrocarbons, carbon dioxide, dimethyl ether, ammonia and combinations thereof,
b) a lubricant oil which is a mineral oil or synthetic oil selected from the group consisting of alkylbenzene, polyol esters, polyalkylene glycols, polyvinyl ethers, carbonates, polyalphaolefins and combinations thereof; and
c) between 0.01 wt.% and 1.0 wt.% relative to said substituting refrigerant or heat transfer fluid of perfluoropolyether.

13. The process of claim 12, wherein at least one of the end groups of said perfluoropolyether is a functionalized group selected from the group consisting of esters, hydroxyls, amines, amides, cyanos, carboxylic acids and sulfonic acids.

14. The process of claim 13, wherein at least one of the end groups of said perfluoropolyether is carboxylic acid.

15. The process of claim 13, wherein at least one of the end groups of said perfluoropolyether is sulfonic acid.

16. The process of claim 12, wherein at least one of the two end groups of the perfluoropolyether is an unfunctionalized branched or straight chain perfluoroalkyl radical.

17. A refrigeration apparatus or air-conditioning apparatus using the composition of claim 1.

## Patentansprüche

1. Zusammensetzung umfassend:
1) ein Kühlmittel oder Wärmeübertragungsfluid ausgewählt aus der Gruppe bestehend aus gesättigten Fluorkohlenstoffen, ungesättigten Fluorkohlenstoffen, Chlorfluorkohlenstoffen, Fluorchlorkohlenwasserstoffen, Fluorethern, Kohlenwasserstoffen, Kohlendioxid, Dimethylether, Ammoniak und Kombinationen davon,
2) ein Gleitmittelöl, das ein Mineralöl oder synthetisches Öl ist ausgewählt aus der Gruppe bestehend aus Alkylbenzol, Polyolestern, Polyalkylenglycolen, Polyvinylethern, Carbonaten, Polyalphaolefinen und Kombinationen davon; und
3) einen Perfluorpolyether, wobei die Menge des Perfluorpolyethers zwischen 0,01 Gew.-% und 1,0 Gew.-%, auf das Kühlmittel oder Wärmeübertagungsfluid bezogen, liegt.

2. Zusammensetzung nach Anspruch 1, wobei mindestens eine der Endgruppen des Perfluorpolyethers eine funktionalisierte Gruppe ist ausgewählt aus der Gruppe bestehend aus Estern, Hydroxylen, Aminen, Amiden, Cyanos, Carbonsäuren und Sulfonsäuren.

3. Zusammensetzung nach Anspruch 2, wobei mindestens eine der Endgruppen des Perfluorpolyethers Carbonsäure ist.

4. Zusammensetzung nach Anspruch 2, wobei mindestens eine der Endgruppen des Perfluorpolyethers Sulfonsäure ist.

5. Zusammensetzung nach Anspruch 1, wobei mindestens eine der zwei Endgruppen des Perfluorpolyethers ein unfunktionalisiertes verzweigtes oder geradkettiges Perfluoralkylradikal ist.

6. Zusammensetzung nach Anspruch 1, wobei das Kühlmittel oder Wärmeübetragungsfluid ein ungesättigter Fluorkohlenstoff ist.

7. Zusammensetzung nach Anspruch 6, wobei das Kühlmittel oder Wärmeübetragungsfluid aus der Gruppe ausgewählt ist bestehend aus 1,2,3,3,3-Pentafluor-1-propen, 1,1,3,3,3-Pentafluor-1-propen, 1,1,2,3,3-Pentafluor-1-propen, 1,2,3,3-Tetrafluor-1-propen, 2,3,3,3-Tetrafluor-1-propen, 1,3,3,3-Tetrafluor-1-propen, 1,1,2,3-Tetrafluor-1-propen, 1,1,3,3-Tetrafluor-1-propen, 1,2,3,3-Tetrafluor-1-propen, 2,3,3-trifluor-1-propen, 3,3,3-Trifluor-1-propen, 1,1,2-Trifluor-1-propen, 1,1,3-Trifluor-1-propen, 1,2,3-Trifluor-1-propen, 1,3,3-Trifluor-1-propen, 1,1,1,2,3,4,4,4-Octafluor-2-buten, 1,1,2,3,3,4,4,4-Octafluor-1-buten, 1,1,1,2,4,4,4-Heptafluor-2-buten, 1,2,3,3,4,4,4-Heptafluor-1-buten, 1,1,1,2,3,4,4-Heptafluor-2-buten, 1,3,3,3-Tetrafluor-2-(trifluormethyl)-2-propen, 1,1,3,3,4,4,4-Heptafluor-1-buten, 1,1,2,3,4,4,4-Heptafluor-1-buten, 1,1,2,3,3,4,4-Heptafluor-1-buten, 2,3,3,4,4,4-Hexafluor-1-buten, 1,1,1,4,4,4-Hexafluor-2-buten, 1,3,3,4,4,4-Hexafluor-1-buten, 1,2,3,4,4,4-Hexafluor-1-buten, 1,2,3,3,4,4-Hexafluor-1-buten, 1,1,2,3,4,4-Hexafluor-2-buten, 1,1,1,2,3,4-Hexafluor-2-buten, 1,1,1,2,3,3-Hexafluor-2-buten, 1,1,1,3,4,4-Hexafluor-2-buten, 1,1,2,3,3,4-Hexafluor-1-buten, 1,1,2,3,4,4-Hexafluor-1-buten, 3,3,3-Trifluor-2-(trifluormethyl)-1-propen, 1,1,1,2,4-Pentafluor-2-buten, 1,1,1,3,4-Pentafluor-2-buten, 3,3,4,4,4-Pentafluor-1-buten, 1,1,1,4,4-Pentafluor-2-buten, 1,1,1,2,3-Pentafluor-2-buten, 2,3,3,4,4-Pentafluor-1-buten, 1,1,2,4,4-Pentafluor-2-buten, 1,1,2,3,3-Pentafluor-1-buten, 1,1,2,3,4-Pentafluor-2-buten, 1,2,3,3,4-Pentafluor-1-buten, 1,1,3,3,3-Pentafluor-2-methyl-1-propen, 2-(Difluormethyl)-3,3,3-trifluor-1-propen, 3,3,4,4-Tetrafluor-1-buten, 1,1,3,3-Tetrafluor-2-methyl-1-propen, 1,3,3,3-Tetrafluor-2-methyl-1-propen, 2-(Difluoromethyl)-3,3-difluor-1-propen, 1,1,1,2-Tetrafluor-2-buten, 1,1,1,3-Tetrafluor-2-buten, 1,1,1,2,3,4,4,5,5,5-Decafluor-2-penten, 1,1,2,3,3,4,4,5,5,5-Decafluor-1-penten, 1,1,1,4,4,4-Hexafluor-2-(trifluormethyl)-2-buten, 1,1,1,2,4,4,5,5,5-Nonafluor-2-penten, 1,1,1,3,4,4,5,5,5-Nonafluor-2-penten, 1,2,3,3,4,4,5,5,5-Nonafluor-1-penten, 1,1,3,3,4,4,5,5,5-Nonafluor-1-penten, 1,1,2,3,3,4,4,5,5-Nonafluor-1-penten, 1,1,2,3,4,4,5,5,5-Nonafluor-2-penten, 1,1,1,2,3,4,4,5,5-Nonafluor-2-penten, 1,1,1,2,3,4,5,5,5-Nonafluor-2-penten, 1,2,3,4,4,4-Hexafluor-3-(trifluormethyl)-1-buten, 1,1,2,4,4,4-Hexafluor-3-(trifluormethyl)-1-buten, 1,1,1,4,4,4-Hexafluor-3-(trifluormethyl)-2-buten, 1,1,3,4,4,4-Hexafluor-3-(trifluormethyl)-1-buten, 2,3,3,4,4,5,5,5-Octafluor-1-penten, 1,2,3,3,4,4,5,5-Octafluor-1-penten, 3,3,4,4,4-Pentafluor-2-(trifluormethyl)-1-buten, 1,1,4,4,4-Pentafluor-3-(trifluormethyl)-1-buten, 1,3,4,4,4-Pentafluor-3-(trifluormethyl)-1-buten, 1,1,4,4,4-Pentafluor-2-(trifluormethyl)-1-buten, 1,1,1,4,4,5,5,5-Octafluor-2-penten, 3,4,4,4-Tetrafluor-3-(trifluormethyl)-1-buten, 3,3,4,4,5,5,5-Heptafluor-1-penten, 2,3,3,4,4,5,5-Heptafluor-1-penten, 1,1,3,3,5,5,5-Heptafluor-1-penten, 1,1,1,2,4,4,4-Heptafluor-3-methyl-2-buten, 2,4,4,4-Tetrafluor-3-(trifluormethyl)-1-buten, 1,4,4,4-Tetrafluor-3-(trifluormethyl)-1-buten, 1,4,4,4-Tetrafluor-3-(trifluormethyl)-2-buten, 2,4,4,4-Tetrafluor-3-(trifluormethyl)-2-buten, 3-(Trifluormethyl)-4,4,4-trifluor-2-buten, 3,4,4,5,5,5-Hexafluor-2-penten, 1,1,1,4,4,4-Hexafluor-2-methyl-2-buten, 3,3,4,5,5,5-Hexafluor-1-penten, 4,4,4-Trifluor-2-(trifluormethyl)-1-buten, 1,1,2,3,3,4,4,5,5,6,6,6-Dodecafluor-1-hexen, 1,1,1,2,2,3,4,5,5,6,6,6-Dodecafluor-3-hexen, 1,1,1,4,4,4-Hexafluor-2,3-bis(trifluormethyl)-2-buten, 1,1,1,4,4,5,5,5-Octafluor-2-trifluormethyl-2-penten, 1,1,1,3,4,5,5,5-Octafluor-4-(trifluormethyl)-2-penten, 1,1,1,4,5,5,5-Heptafluor-4-(trifluormethyl)-2-penten, 1,1,1,4,4,5,5,6,6,6-Decafluor-2-hexen, 1,1,1,2,2,5,5,6,6,6-Decafluor-3-hexen, 3,3,4,4,5,5,6,6,6-Nonafluor-1-hexen, 4,4,4-Trifluor-3,3-bis(trifluormethyl)-1-buten, 1,1,1,4,4,4-Hexafluor-3-methyl-2-(trifluormethyl)-2-buten, 2,3,3,5,5,5-Hexafluor-4-(trifluormethyl)-1-penten, 1,1,1,2,4,4,5,5,5-Nonafluor-3-methyl-2-penten, 1,1,1,5,5,5-Hexafluor-4-(trifluormethyl)-2-penten, 3,4,4,5,5,6,6,6-Octafluor-2-hexen, 3,3,4,4,5,5,6,6-Octafluor-2-hexen, 1,1,1,4,4-Pentafluor-2-(trifluormethyl)-2-penten, 4,4,5,5,5-Pentafluor-2-(trifluormethyl)-1-penten, 3,3,4,4,5,5,5-Heptafluor-2-methyl-1-penten, 1,1,1,2,3,4,4,5,5,6,6,7,7,7-Tetradecafluor-2-hepten, 1,1,1,2,2,3,4,5,5,6,6,7,7,7-Tetradecafluor-2-hepten, 1,1,1,3,4,4,5,5,6,6,7,7,7-Tridecafluor-2-hepten, 1,1,1,2,4,4,5,5,6,6,7,7,7-Tridecafluor-2-hepten, 1,1,1,2,2,4,5,5,6,6,7,7,7-Tridecafluor-3-hepten, 1,1,1,2,2,3,5,5,6,6,7,7,7-Tridecafluor-3-hepten, 4,4,5,5,6,6,6-Heptafluor-2-hexen, 4,4,5,5,6,6,6-Heptafluor-1-hexen, 1,1,1,2,2,3,4-Heptafluor-3-hexen, 4,5,5,5-Tetrafluor-4-(trifluormethyl)-1-penten, 1,1,1,2,5,5,5-Heptafluor-4-methyl-2-penten, 1,1,1,3-Tetrafluor-2-(trifluormethyl)-2-penten, 1,2,3,3,4,4-Hexafluorcyclobuten, 3,3,4,4-Tetrafluorcyclobuten, 3,3,4,4,5,5-Hexafluorcyclopenten, 1,2,3,3,4,4,5,5-Octafluorcyclopenten, 1,2,3,3,4,4,5,5,6,6-Decafluorcyclohexen, 1,1,1,2,3,4,5,5,5-Nonafluor-4-(trifluormethyl)-2-penten, Pentafluorethyltrifluorvinylether, Trifluormethyltrifluorvinylether.

8. Zusammensetzung nach Anspruch 7, wobei das Kühlmittel oder Wärmeübertragungsfluid aus der Gruppe ausgewählt ist bestehend aus 1,2,3,3,3-Pentafluor-1-propen, 1,1,3,3,3-Pentafluor-1-propen, 1,1,2,3,3-Pentafluor-1-propen, 1,2,3,3-Tetrafluor-1-propen, 2,3,3,3-Tetrafluor-1-propen, 1,3,3,3-Tetrafluor-1-propen, 1,1,2,3-Tetrafluor-1-propen, 1,1,3,3-Tetrafluor-1-propen, 1,2,3,3-Tetrafluor-1-propen, 1,1,1,2,3,4,4,4-Octafluor-2-buten, 1,1,1,2,4,4,4-Heptafluor-2-buten und 1,1,1,4,4,4-Hexafluor-2-buten.

9. Verfahren für das Erzeugen von Kühlung, wobei das Verfahren das Verdampfen der Kühlmittel- oder Wärmeübertragungsfluidzusammensetzung nach Anspruch 1 in der Nähe eines zu kühlenden Körpers und daraufhin das Kondensieren der Zusammensetzung umfasst.

10. Verfahren für das Erzeugen von Wärme, wobei das Verfahren das Kondensieren der Kühlmittel- oder Wärmeübertragungsfluidzusammensetzung nach Anspruch 1 in der Nähe des zu wärmenden Körpers und daraufhin das Verdampfen der Zusammensetzung umfasst.

11. Verfahren zum Übertragen von Wärme, wobei das Verfahren das Übertragen der Zusammensetzungen nach Anspruch 1 von einer Wärmequelle zu einem Kühlkörper umfasst.

12. Verfahren zum Ersetzen von Kühlmittel oder Wärmeübertragungsfluid, umfassend: das Entfernen von vorhandenem Kühlmittel oder Wärmeübertragungsfluid aus dem Kühl- oder Klimatisierungssystem und das Einführen, in das Kühl- oder Klimatisierungssystem, einer Zusammensetzung umfassend:
a) ein substituierendes Kühlmittel oder Wärmeübertragungsfluid ausgewählt aus der Gruppe bestehend aus gesättigten Fluorkohlenstoffen, ungesättigten Fluorkohlenstoffen, Fluorchlorkohlenwasserstoffen, Fluorethern, Kohlenwasserstoffen, Kohlendioxid, Dimethylether, Ammoniak und Kombinationen davon,
b) ein Gleitmittelöl, das ein Mineralöl oder synthetisches Öl ist ausgewählt aus der Gruppe bestehend aus Alkylbenzol, Polyolesters, Polyalkylenglycolen, Polyvinylethern, Carbonaten, Polyalphaolefinen und Kombinationen davon; und
c) 0,01 Gew.-% bis 1,0 Gew.-%, auf das substituierende Kühlmittel oder Wärmeübertagungsfluid bezogen, Perfluorpolyether.

13. Verfahren nach Anspruch 12, wobei mindestens eine der Endgruppen des Perfluorpolyethers eine funktionalisierte Gruppe ist ausgewählt aus der Gruppe bestehend aus Estern, Hydroxylen, Aminen, Amiden, Cyanos, Carbonsäuren und Sulfonsäuren.

14. Verfahren nach Anspruch 13, wobei mindestens eine der Endgruppen des Perfluorpolyethers Carbonsäure ist.

15. Zusammensetzung nach Anspruch 13 wobei mindestens eine der Endgruppen des Perfluorpolyethers Sulfonsäure ist.

16. Verfahren nach Anspruch 12, wobei mindestens eine der zwei Endgruppen des Perfluorpolyethers ein unfunktionalisiertes verzweigtes oder geradkettiges Perfluoralkylradikal ist.

17. Kühlapparat oder Klimatisierungsvorrichtung, wobei die Zusammensetzung nach Anspruch 1 verwendet wird.

## Revendications

1. Composition comprenant:
1) un agent réfrigérant ou fluide de transfert thermique sélectionné dans le groupe constitué des fluorocarbones saturés, des fluorocarbones insaturés, des chlorofluorocarbones, des hydrocarbures chlorés et fluorés, des éthers fluorés, des hydrocarbures, du dioxyde de carbone, de l'éther de diméthyle, de l'ammoniac et de leurs combinaisons,
2) une huile lubrifiante qui est une huile minérale ou une huile synthétique sélectionnée dans le groupe constitué de l'alkylbenzène, des esters de polyol, des polyalcylène glycols, des poly(éthers de vinyle), des carbonates, des polyalphaoléfines et de leurs combinaisons; et
3) un perfluoropolyéther, où la quantité dudit perfluoropolyéther est comprise entre 0,01 % en pds et 1,0 % en pds par rapport audit agent réfrigérant ou fluide de transfert thermique.

2. Composition selon la revendication 1 dans laquelle au moins l'un des groupes terminaux dudit perfluoropolyéther est un groupe fonctionnalisé sélectionné dans le groupe constitué des esters, des hydroxyles, des amines, des amides, des groupes cyano, des acides carboxyliques et des acides sulfoniques.

3. Composition selon la revendication 2 dans laquelle au moins l'un des groupes terminaux dudit perfluoropolyéther est l'acide carboxylique.

4. Composition selon la revendication 2 dans laquelle au moins l'un des groupes terminaux dudit perfluoropolyéther est l'acide sulfonique.

5. Composition selon la revendication 1, dans laquelle au moins l'un des deux groupes terminaux du perfluoropolyéther est un radical perfluoroalkyle non fonctionnalisé à chaîne ramifiée ou linéaire.

6. Composition selon la revendication 1 dans laquelle ledit agent réfrigérant ou fluide de transfert thermique est un fluorocarbone insaturé.

7. Composition selon la revendication 6 dans laquelle ledit agent réfrigérant ou fluide de transfert thermique est sélectionné dans le groupe constitué du 1,2,3,3,3-pentafluoro-1-propène, 1,1,3,3,3-pentafluoro-1-propène, 1,1,2,3,3-pentafluoro-1-propène, 1,2,3,3-tétrafluoro-1-propène, 2,3,3,3-tétrafluoro-1-propène, 1,3,3,3-tétrafluoro-1-propène, 1,1,2,3-tétrafluoro-1-propène, 1,1,3,3-tétrafluoro-1-propène, 1,2,3,3-tétrafluoro-1-propène, 2,3,3-trifluoro-1-propène, 3,3,3-trifluoro-1-propène, 1,1,2-trifluoro-1-propène, 1,1,3-trifluor0-1-propène, 1,2,3-trifluoro-1-propène, 1,3,3-trifluoro-1-propène, 1,1,1,2,3,4,4,4-octafluoro-2-butène, 1,1,2,3,3,4,4,4-octafluoro-1-butène, 1,1,1,2,4,4,4-heptafluoro-2-butène, 1,2,3,3,4,4,4-heptafluoro-1-butène, 1,1,1,2,3,4,4-heptafluoro-2-butène, 1,3,3,3-tétrafluoro-2-(trifluorométhyl)-2-propène, 1,1,3,3,4,4,4-heptafluoro-1-butène, 1,1,2,3,4,4,4-heptafluoro-1-butène, 1,1,2,3,3,4,4-heptafluoro-1-butène, 2,3,3,4,4,4-hexafluoro-1-butène, 1,1,1,4,4,4-hexafluoro-2-butène, 1,3,3,4,4,4-hexafluoro-1-butène, 1,2,3,4,4,4-hexafluoro-1-butène, 1,2,3,3,4,4-hexafluoro-1-butène, 1,1,2,3,4,4-hexafluoro-2-butène, 1,1,1,2,3,4-hexafluoro-2-butène, 1,1,1,2,3,3-hexafluoro-2-butène, 1,1,1,3,4,4-hexafluoro-2-butène, 1,1,2,3,3,4-hexafluoro-1-butène, 1,1,2,3,4,4-hexafluoro-1-butène, 3,3,3-trifluoro-2-(trifluorométhyl)-1-propène, 1,1,1,2,4-pentafluoro-2-butène, 1,1,1,3,4-pentafluoro-2-butène, 3,3,4,4,4-pentafluoro-1-butène, 1,1,1,4,4-pentafluoro-2-butène, 1,1,1,2,3-pentafluoro-2-butène, 2,3,3,4,4-pentafluoro-1-butène, 1,1,2,4,4-pentafluoro-2-butène, 1,1,2,3,3-pentafluoro-1-butène, 1,1,2,3,4-pentafluoro-2-butène, 1,2,3,3,4-pentafluoro-1-butène, 1,1,3,3,3-pentafluoro-2-méthyl-1-propène, 2-(difluorométhyl)-3,3,3-trifluoro-1-propène, 3,3,4,4-tétrafluoro-1-butène, 1,1,3,3-tétrafluoro-2-méthyl-1-propène, 1,3,3,3-tétrafluoro-2-méthyl-1-propène, 2-(difluorométhyl)-3,3-difluoro-1-propène, 1,1,1,2-tétrafluoro-2-butène, 1,1,1,3-tétrafluoro-2-butène, 1,1,1,2,3,4,4,5,5,5-décafluoro-2-pentène, 1,1,2,3,3,4,4,5,5,5-décafluoro-1-pentène, 1,1,1,4,4,4-hexafluoro-2-(trifluoromèthyl)-2-butène, 1,1,1,2,4,4,5,5,5-nonafluoro-2-pentène, 1,1,1,3,4,4,5,5,5-nonafluoro-2-pentène, 1,2,3,3,4,4,5,5,5-nonafluoro-1-pentène, 1,1,3,3,4,4,5,5,5-nonafluoro-1-pentène, 1,1,2,3,3,4,4,5,5-nonafluoro-1-pentène, 1,1,2,3,4,4,5,5,5-nonafluoro-2-pentène, 1,1,1,2,3,4,4,5,5-nonafluoro-2-pentène, 1,1,1,2,3,4,5,5,5-nonafluoro-2-pentène, 1,2,3,4,4,4-hexafluoro-3-(trifluorométhyl)-1-butène, 1,1,2,4,4,4-hexafluoro-3-(trifluorométhyl)-1-butène, 1,1,1,4,4,4-hexafluoro-3-(trifluorométhyl)-2-butène, 1,1,3,4,4,4-hexafluoro-3-(trifluorométhyl)-1-butène, 2,3,3,4,4,5,5,5-octafluoro-1-pentène, 1,2,3,3,4,4,5,5-octafluoro-1-pentène, 3,3,4,4,4-pentafluoro-2-(trifluorométhyl)-1-butène, 1,1,4,4,4-pentafluoro-3-(trifluorométhyl)-1-butène, 1,3,4,4,4-pentafluoro-3-(trifluorométhyl)-1-butène, 1,1,4,4,4-pentafluoro-2-(trifluorométhyl)-1-butène, 1,1,1,4,4,5,5,5-octafluoro-2-pentène, 3,4,4,4-tétrafluoro-3-(trifluorométhyl)-1-butène, 3,3,4,4,5,5,5-heptafluoro-1-pentène, 2,3,3,4,4,5,5-heptafluoro-1-pentène, 1,1,3,3,5,5,5-heptafluoro-1-pentène, 1,1,1,2,4,4,4-heptafluoro-3-méthyl-2-butène, 2,4,4,4-tétrafluoro-3-(trifluorométhyl)-1-butène, 1,4,4,4-tétrafluoro-3-(trifluorométhyl)-1-butène, 1,4,4,4-tétrafluoro-3-(trifluorométhyl)-2-butène, 2,4,4,4-tétrafluoro-3-(trifluorométhyl)-2-butène, 3-(trifluorométhyl)-4,4,4-trifluoro-2-butène, 3,4,4,5,5,5-hexafluoro-2-pentène, 1,1,1,4,4,4-hexafluoro-2-méthyl-2-butène, 3,3,4,5,5,5-hexafluoro-1-pentène, 4,4,4-trifluoro-2-(trifluorométhyl)-1-butène, 1,1,2,3,3,4,4,5,5,6,6,6-dodècafluoro-1-hexène, 1,1,1,2,2,3,4,5,5,6,6,6-dodécafluoro-3-hexène, 1,1,1,4,4,4-hexafluoro-2,3-bis(trifluorométhyl)-2-butène, 1,1,1,4,4,5,5,5-octafluoro-2-trifluoromèthyl-2-pentène, 1,1,1,3,4,5,5,5-octafluoro-4-(trifluorométhyl)-2-pentène, 1,1,1,4,5,5,5-heptafluoro-4-(trifluorométhyl)-2-pentène, 1,1,1,4,4,5,5,6,6,6-décafluoro-2-hexène, 1,1,1,2,2,5,5,6,6,6-décafluoro-3-hexène, 3,3,4,4,5,5,6,6,6-nonafluoro-1-hexène, 4,4,4-trifluoro-3,3-bis(trifluorométhyl)-1-butène, 1,1,1,4,4,4-hexafluoro-3-méthyl-2-(trifluorométhyl)-2-butène, 2,3,3,5,5,5-hexafluoro-4-(trifluorométhyl)-1-pentène, 1,1,1,2,4,4,5,5,5-nonafluoro-3-méthyl-2-pentène, 1,1,1,5,5,5-hexafluoro-4-(trifluorométhyl)-2-pentène, 3,4,4,5,5,6,6,6-octafluoro-2-hexène, 3,3,4,4,5,5,6,6-octafluoro-2-hexène, 1,1,1,4,4-pentafluoro-2-(trifluorométhyl)-2-pentène, 4,4,5,5,5-pentafluoro-2-(trifluorométhyl)-1-pentène, 3,3,4,4,5,5,5-heptafluoro-2-méthyl-1-pentène, 1,1,1,2,3,4,4,5,5,6,6,7,7,7-tétradécafluoro-2-heptène, 1,1,1,2,2,3,4,5,5,6,6,7,7,7-tétradécafluoro-2-heptène, 1,1,1,3,4,4,5,5,6,6,7,7,7-tridécafluoro-2-heptène, 1,1,1,2,4,4,5,5,6,6,7,7,7-tridécafluoro-2-heptène, 1,1,1,2,2,4,5,5,6,6,7,7,7-tridécafluoro-3-heptène, 1,1,1,2,2,3,5,5,6,6,7,7,7-tridécafluoro-3-heptène, 4,4,5,5,6,6,6-heptafluoro-2-hexène, 4,4,5,5,6,6,6-heptafluoro-1-hexène, 1,1,1,2,2,3,4-heptafluoro-3-hexène, 4,5,5,5-tétrafluoro-4-(trifluorométhyl)-1-pentène, 1,1,1,2,5,5,5-heptafluoro-4-méthyl-2-pentène, 1,1,1,3-tétrafluoro-2-(trifluorométhyl)-2-pentène, 1,2,3,3,4,4-hexafluorocyclobutène, 3,3,4,4-tétrafluorocyclobutène, 3,3,4,4,5,5-hexafluorocyclopentène, 1,2,3,3,4,4,5,5-octafluorocyclopentène, 1,2,3,3,4,4,5,5,6,6-décafluorocyclohexène, 1,1,1,2,3,4,5,5,5-nonafluoro-4-(trifluorométhyl)-2-pentène, de l'éther de pentafluoroéthyl trifluorovinyle, éther de trifluorométhyl trifluorovinyle.

8. Composition selon la revendication 7 dans laquelle ledit agent réfrigérant ou fluide de transfert thermique est sélectionné dans le groupe constitué du 1,2,3,3,3-pentafluoro-1-propène, 1,1,3,3,3-pentafluoro-1-propène, 1,1,2,3,3-pentafluoro-1-propène, 1,2,3,3-tétrafluoro-1-propène, 2,3,3,3-tétrafluoro-1-propène, 1,3,3,3-tétrafluoro-1-propène, 1,1,2,3-tétrafluoro-1-propène, 1,1,3,3-tétrafluoro-1-propène, 1,2,3,3-tétrafluoro-1-propène, 1,1,1,2,3,4,4,4-octafluoro-2-butène, 1,1,1,2,4,4,4-heptafluoro-2-butène et du 1,1,1,4,4,4-hexafluoro-2-butène.

9. Procédé de production de réfrigération, ledit procédé comprenant: l'évaporation de la composition d'agent réfrigérant ou de fluide de transfert thermique selon la revendication 1 à proximité d'un corps à refroidir et par la suite la condensation de ladite composition.

10. Procédé de production de chaleur, ledit procédé comprenant: la condensation de la composition d'agent réfrigérant ou de fluide de transfert thermique selon la revendication 1 à proximité du corps à chauffer et par la suite l'évaporation de ladite composition.

11. Procédé de transfert de chaleur, ledit procédé comprenant le transfert des compositions selon la revendication 1 depuis une source de chaleur vers un puits de chaleur.

12. Procédé de remplacement d'agent réfrigérant ou de fluide de transfert thermique, comprenant: l'élimination de l'agent réfrigérant ou du fluide de transfert thermique existant du système de réfrigération ou de conditionnement d'air, et l'introduction dans ledit système de réfrigération ou de conditionnement d'air d'une composition comprenant:
a) un agent réfrigérant de substitution ou un fluide de transfert thermique sélectionné dans le groupe constitué des fluorocarbones saturés, des fluorocarbones insaturés, des hydrocarbures chlorés et fluorés, des éthers fluorés, des hydrocarbures, du dioxyde de carbone, de l'éther de diméthyle, de l'ammoniac et de leurs combinaisons,
b) une huile lubrifiante qui est une huile minérale ou une huile synthétique sélectionnée dans le groupe constitué de l'alkylbenzène, des esters de polyol, des polyalcylène glycols, des poly(éthers de vinyle), des carbonates, des polyalphaoléfines et de leurs combinaisons; et
c) entre 0,01 % en pds et 1,0 % en pds par rapport audit agent réfrigérant de substitution ou fluide de transfert thermique de perfluoropolyéther.

13. Procédé selon la revendication 12, dans lequel au moins l'un des groupes terminaux dudit perfluoropolyéther est un groupe fonctionnalisé sélectionné dans le groupe constitué des esters, des hydroxyles, des amines, des amides, des groupes cyano, des acides carboxyliques et des acides sulfoniques.

14. Procédé selon la revendication 13, dans lequel au moins l'un des groupes terminaux dudit perfluoropolyéther est l'acide carboxylique.

15. Procédé selon la revendication 13, dans lequel au moins l'un des groupes terminaux dudit perfluoropolyéther est l'acide sulfonique.

16. Procédé selon la revendication 12, dans lequel au moins l'un des deux groupes terminaux du perfluoropolyéther est un radical perfluoroalkyle non fonctionnalisé à chaîne ramifiée ou linéaire.

17. Appareil de réfrigération ou appareil de conditionnement d'air utilisant la composition selon la revendication 1.
